# EUROPEAN PATENT APPLICATION

(11) **EP 4 654 025 A1**
(43) Date of publication of application: **26.11.2025**
(21) Application number: 24744301.3
(22) Date of filing: 17.01.2024
(51) Int. Cl.: G06F 12/08

(54) **CACHING METHOD AND APPARATUS, ELECTRONIC DEVICE, STORAGE MEDIUM, AND PROGRAM PRODUCT**

(30) Priority: 17.01.2023 CN 202310077287
(71) Applicant: Moore Threads Technology Co., Ltd., Beijing 100036 (CN)
(72) Inventor: YAO, Zhangrui, Beijing 100036 (CN); ZHANG, Yubo, Beijing 100036 (CN)
(74) Representative: Colombo, Stefano Paolo
(86) International application number: PCT/CN2024/072755
(87) International publication number: WO 2024/153126

(57) **Abstract**

A cache method and apparatus, an electronic device, a storage medium, and a program product. The cache method includes: partitioning a cache space into a plurality of banks based on physical addresses, wherein the plurality of banks allow parallel access (S11); and in response to a data query request, performing a read/write operation on at least one of the plurality of banks (S12).

## Description

### CROSS REFERENCES

The present disclosure is based on and claims priority to Chinese patent application No. 202310077287.7, filed on January 17, 2023. The entire contents of the Chinese patent application are incorporated herein by reference.

### TECHNICAL FIELD

The present disclosure relates to the field of computer technology, in particular to a cache method, apparatus, an electronic device, a storage medium, and a program product.

### BACKGROUND

In the related art, a multi-threaded processor architecture can typically schedule parallel read/write operations, including access to a cache partitioned into multiple banks. In a cache partitioned into multiple banks, each bank can independently support the read/write operations, so that the processor can implement multiple data read/write operations in a single cycle.

In processor-proximal multi-bank caches, a Virtual Index Virtual Tag (VIVT) or a Virtual Index Physical Tag (VIPT) reduces a cache hit access time by eliminating or paralleling a Translation Look-aside Buffer (TLB) when a requester performs cache lookups.

### SUMMARY

The present disclosure provides a technical solution of cache.

According to one aspect of the present disclosure, there is provided a cache method, comprising:
partitioning a cache space into a plurality of banks based on physical addresses, wherein the plurality of banks allow parallel access; and
in response to a data query request, performing a read/write operation on at least one of the plurality of banks.

In an embodiment of the present disclosure, the cache space is partitioned into a plurality of banks based on physical addresses, wherein the plurality of banks allow parallel access. In response to a data query request, a read/write operation is performed on at least one of the plurality of banks. Thus, each bank only needs to be connected respectively to one memory channel, rather than being connected respectively to each memory channel, thereby reducing the complexity and size of the interconnection design, lowering the power consumption of the cache, and improving the performance of the data path of the processor. Moreover, in an embodiment of the present disclosure, the banks partitioned by the physical addresses perform lookup for physical address by a MMU or a TLB prior to writing data, thereby eliminating aliasing issues.

In some embodiments of the present disclosure, partitioning the cache space into a plurality of banks based on the physical addresses comprises:
partitioning the cache space of a shared cache into a plurality of banks based on the physical addresses.

In an embodiment of the present disclosure, by partitioning the cache space of the shared cache into a plurality of banks based on the physical addresses, it is possible to support a plurality of requesters accessing different banks of the shared cache simultaneously, thereby the access efficiency on the shared cache can be improved.

In some embodiments of the present disclosure, performing the read/write operation on at least one of the plurality of banks in response to the data query request comprises:
in response to the data query request, acquiring identification information of target data requested by the data query request; and
performing, based on the identification information of the target data, the read/write operation on at least one of the plurality of banks.

In an embodiment of the present disclosure, by acquiring the identification information of the target data requested by the data query request in response to the data query request and performing the read/write operation on at least one of the plurality banks based on the identification information of the target data, accurate cache read/write operations may be performed based on the identification information of the target data.

In some embodiments of the present disclosure, performing the read/write operation on at least one of the plurality banks based on the identification information of the target data comprises:
in response to determining a presence of the target data in the plurality of banks based on the identification information of the target data, acquiring the target data from the plurality of banks, and returning the target data.

In an embodiment of the present disclosure, by acquiring the target data from the plurality of banks in response to determining the presence of the target data in the plurality of banks based on the identification information of the target data and returning the target data, reading of cache data from the banks can be achieved.

In some embodiments of the present disclosure, acquiring the target data from the plurality of banks comprises:
determining identification information of a first target bank where the target data is located; and
acquiring the target data from the first target bank based on the identification information of the first target bank.

In an embodiment of the present disclosure, by determining the identification information of the first target bank where the target data is located and acquiring the target data from the first target bank based on the identification information of the first target bank, reading of cache data from the banks can be achieved.

In some embodiments of the present disclosure, performing the read/write operation on at least one of the plurality banks based on the identification information of the target data further comprises:
in response to determining an absence of the target data in the plurality of banks based on the identification information of the target data, acquiring the target data from a memory or a secondary storage, writing the target data into one of the plurality of banks, and returning the target data.

In an embodiment of the present disclosure, by acquiring the target data from the memory or secondary storage in response to determining the absence of the target data in the plurality of banks based on the identification information of the target data, writing the target data into one of the plurality of banks, and returning the target data, writing the data into the bank and reading the cache data from the bank can be achieved.

In some embodiments of the present disclosure, writing the target data into one of the plurality of banks comprises:
determining a second target bank in the plurality of banks by a Hash algorithm; and
writing the target data into the second target bank.

In an embodiment of the present disclosure, by determining the second target bank in the plurality of banks by the Hash algorithm and writing the target data into the second target bank, load balancing among the respective banks may be achieved.

According to one aspect of the present disclosure, there is provided a cache apparatus, comprising:
a partitioning module configured to partition a cache space into a plurality of banks based on physical addresses, wherein the plurality of banks allow parallel access; and
a read/write module configured to perform a read/write operation on at least one of the plurality of banks in response to a data query request.

In some embodiments of the present disclosure, the partitioning module is configured to:
partition a cache space of a shared cache into a plurality of banks based on physical addresses.

In some embodiments of the present disclosure, the read/write module is configured to:
in response to a data query request, acquire identification information of target data requested by the data query request; and
perform the read/write operation on at least one of the plurality of banks based on the identification information of the target data.

In some embodiments of the present disclosure, the read/write module is configured to:
in response to determining a presence of the target data in the plurality of banks based on the identification information of the target data, acquire the target data from the plurality of banks and return the target data.

In some embodiments of the present disclosure, the read/write module is configured to:
determine identification information of a first target bank where the target data is located; and
acquire the target data from the first target bank based on the identification information of the first target bank.

In some embodiments of the present disclosure, the read/write module is configured to:
in response to determining an absence of the target data in the plurality of banks based on the identification information of the target data, acquire the target data from a memory or a secondary storage, write the target data into one of the plurality of banks, and return the target data.

In some embodiments of the present disclosure, the read/write module is configured to:
determine a second target bank in the plurality of banks by a Hash algorithm; and
write the target data into the second target bank.

According to one aspect of the present disclosure, there is provided an electronic device, comprising: one or more processors; and a memory for storing executable instructions, wherein the one or more processors are configured to invoke the executable instructions stored in the memory to carry out the methods described above.

According to one aspect of the present disclosure, there is provided a computer readable storage medium having computer program instructions stored therein, wherein the computer program instructions, when executed by a processor, implement the methods described above.

According to one aspect of the present disclosure, there is provided a computer program product comprising computer readable code, or a non-transitory computer readable storage medium carrying computer readable code, wherein when the computer readable code runs in an electronic device, a processor in the electronic device carries out the methods described above.

In an embodiment of the present disclosure, by partitioning the cache space into a plurality of banks based on physical addresses, with the plurality of banks allowing parallel access, and performing the read/write operation on at least one of the plurality of banks in response to a data query request, each bank only needs to be connected respectively to one memory channel rather than being connected respectively to each memory channel, reducing the complexity and size of the interconnection design, lowering the power consumption of the cache, and improving the performance of the data path of the processor. Moreover, in an embodiment of the present disclosure, the banks partitioned by the physical addresses perform lookup for physical address by a MMU or a TLB prior to writing data, thereby eliminating aliasing issues.

It is appreciated that the foregoing general descriptions and the following detailed descriptions are merely exemplary and explanatory, and are not intended to limit the present disclosure.

Other features and aspects of the present disclosure will become apparent in light of the following detailed descriptions of the exemplary embodiments with reference to the drawings.

### BRIEF DESCRIPTION OF THE DRAWINGS

The accompanying drawings, which are incorporated in and constitute a part of the description, illustrate embodiments consistent with the present disclosure and, together with the description, serve to explain the technical solutions of the present disclosure.
FIG. 1 illustrates a flowchart of a cache method provided in an embodiment of the present disclosure.
FIG. 2 illustrates a schematic structural diagram of a VIPB cache provided in an embodiment of the present disclosure.
FIG. 3 illustrates a block diagram of a cache apparatus provided in an embodiment of the present disclosure.
FIG. 4 illustrates a block diagram of an electronic device 1900 provided in an embodiment of the present disclosure.

### DETAILED DESCRIPTION

Various exemplary embodiments, features and aspects of the present disclosure will be explained in detail below with reference to the drawings. In the drawings, the same numerical references denote elements with the same or similar functions. Although various aspects of the embodiments are shown in the drawings, unless otherwise specified, the drawings are not necessarily drawn to scale.

The word "exemplary" used here means "serving as an example, embodiment or illustration". Any embodiment described here as "exemplary" is not necessarily to be interpreted as superior to or better than other embodiments.

The term "and/or" used herein is only an association relationship describing associated objects, which means that there may be three relationships, for example, A and/or B may denote three situations: A exists alone, both A and B exist, and B exists alone. Furthermore, the expression "at least one" used herein implies any one of a plurality of elements or any combination of at least two of a plurality of elements. For example, including at least one of A, B, or C can imply that any one element or more than one element selected from a group consisting of A, B, and C is included.

In addition, to better explain the present disclosure, numerous details are given in the following embodiments. It is appreciated by those skilled in the art that the present disclosure can still be implemented without some specific details. In some embodiments, methods, means, elements, and circuits well known to those skilled in the art are not described in detail in order to highlight the gist of the present disclosure.

In related art, given the fact that caches use virtual addresses for indexing and for the purpose of covering the entire cache space without aliase, banks partitioning are typically based on virtual addresses. This type of cache structure may be referred to as a Virtual-Indexing-Virtual-Banking (VIVB) cache, which may employ either virtual tags or physical tags. Here, VB denotes virtual address-based bank partitioning.

In a multi-bank cache, each bank typically has a dedicated bus interface, and the dedicated bus interface of each bank is connected respectively to an interconnection to access a storage (such as a memory or a secondary storage) in case of a cache miss. The interconnection may also be referred to as a Network On Chip (NOC). The interconnection may represent a communication system on a chip, which is primarily responsible for request transmission between respective modules.

In a cache with banks partitioned based on virtual addresses, the address remains virtual at the output of the bank, and TLB translation must be completed before the storage request is sent to the interconnection for routing. The address space after the TLB translation may spread across the entire cache space. Therefore, in a cache with banks partitioned based on virtual addresses, each bank must be connected to all memory channels, respectively. Moreover, in most cases, there will be a plurality of memory channels in a cache. Connecting each bank to all memory channels respectively will lead to higher interconnection costs and increased power consumption, as well as degraded performance of the data path of the processor.

On this basis, an embodiment of the present disclosure provides a cache method. By partitioning a cache space into a plurality of banks based on physical addresses, wherein the plurality of banks allow parallel access, and performing a read/write operation on at least one of the plurality of banks in response to a data query request, each bank only needs to be connected respectively to one memory channel, rather than being connected respectively to each memory channel, thereby reducing the complexity and size of the interconnection design, lowering the power consumption of the cache, and enhancing the performance of the data path of the processor. Moreover, in an embodiment of the present disclosure, the banks partitioned by the physical addresses perform lookup for physical address by a Memory Management Unit (MMU) or a Translation Look-aside Buffer (TLB) prior to writing data, thereby eliminating aliasing issues.

The cache method provided by an embodiment of the present disclosure will be described in detail below with reference to the accompanying drawings.

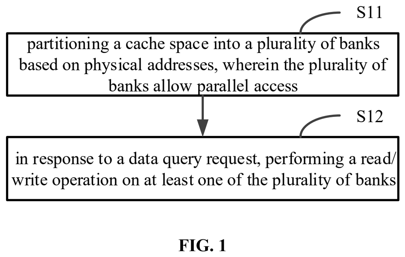

FIG. 1 illustrates a flowchart of a cache method provided in an embodiment of the present disclosure. In some embodiments of the present disclosure, the executing subject of the cache method may be a cache apparatus, for example, the cache method may be executed by a terminal device, a server, or other electronic device. The terminal device may be a user equipment (UE), a mobile device, a user terminal, a terminal, a cellular phone, a cordless phone, a personal digital assistant (PDA), a handheld device, a computing device, a vehicle-mounted device, a wearable device, and the like. In an embodiment of the present disclosure, the cache method may be implemented by a processor invoking computer readable instructions stored in a storage. As shown in FIG. 1, the cache method comprises steps S11 to S12.

In step S11, a cache space is partitioned into a plurality of banks based on physical addresses, wherein the plurality of banks allow parallel access.

In step S12, in response to a data query request, a read/write operation is performed on at least one of the plurality of banks.

An embodiment of the present disclosure provides a cache structure, which is partitioned into banks based on physical addresses. A bank is a logical division of the cache space. The plurality of banks from partitioning the cache space may support parallel access, thereby improving the read/write efficiency of the cache space.

In some embodiments of the present disclosure, the number of banks from partitioning the cache space may be a power of 2. For example, the number of banks may be 4, 8, 16, or the like.

Of course, those skilled in the art may flexibly set the number of banks based on the requirements of actual application scenarios, which is not limited herein.

In an embodiment of the present disclosure, indexing may be based on virtual addresses, that is, the function of looking up for the cache based on virtual addresses may be maintained. Therefore, the cache method provided in the embodiment of the present disclosure may be referred to as VIPB (Virtual Indexing Physical Banking), meaning that the cache structure provided in the embodiment of the present disclosure may be referred to as VIPB cache. Here, PB denotes physical address-based bank partitioning.

In some embodiments of the present disclosure, partitioning the cache space into a plurality of banks based on the physical addresses comprises partitioning the cache space of a shared cache into a plurality of banks based on the physical addresses.

In an embodiment of the present disclosure, the shared cache may refer to the cache at an upper level of the network on chip, that is, the cache upstream of the network on chip. In some cache systems, the shared cache may be a level 2 (L2) cache; in some other cache systems, the shared cache may be a level 3 (L3) cache; and so on.

In some embodiments of the present disclosure, by partitioning the cache space of the shared cache into a plurality of banks based on the physical addresses, it is possible to support a plurality of requesters accessing different banks of the shared cache simultaneously, thereby the access efficiency on the shared cache can be improved.

In an embodiment of the present disclosure, whether a data query request results in a hit may be determined based on a shared directory. That is, it can be determined whether the target data requested by the data query request is present in the plurality of banks based on the shared directory. In a case of a hit (i.e., when the target data is present in any of the plurality of banks), the identification information of the bank where the target data is located may be acquired from the shared directory.

In an embodiment of the present disclosure, the shared directory may be provided in a cache controller.

In some embodiments of the present disclosure, performing the read/write operation on at least one of the plurality of banks in response to the data query request comprises: acquiring the identification information of the target data requested by the data query request in response to the data query request; and performing the read/write operation on at least one of the plurality of banks based on the identification information of the target data.

In an embodiment of the present disclosure, the target data may represent the data requested by the data query request. The identification information of the target data may be any information that can be used to uniquely identify the target data. In an embodiment of the present disclosure, the data query request may carry the identification information of the target data, and therefore the identification information of the target data may be acquired from the data query request.

In an embodiment of the present disclosure, by acquiring the identification information of the target data requested by the data query request in response to the data query request, and performing the read/write operation on at least one of the plurality of banks based on the identification information of the target data, accurate cache read/write operation may be performed based on the identification information of the target data.

In some embodiments of the present disclosure, performing the read/write operation on at least one of the plurality of banks based on the identification information of the target data comprises: in response to determining a presence of the target data in the plurality of banks based on the identification information of the target data, acquiring the target data from the plurality of banks; and returning the target data.

In an embodiment of the present disclosure, when the data query request results in a hit (that is, when the target data is present in any of the plurality of banks), the target data may be acquird from the bank and returned to the requester.

In an embodiment of the present disclosure, by acquiring the target data from the plurality of banks in resposne to determining the presence of the target data in the plurality of banks based on the identification information of the target data and returning the target data, reading of the cache data from the banks can be achieved.

In some embodiments of the present disclosure, acquiring the target data from the plurality of banks comprises: determining identification information of a first target bank where the target data is located; and acquiring the target data from the first target bank based on the identification information of the first target bank.

The identification information of a bank may be any information that can be used to uniquely identify the bank. For example, the identification information of a bank may be the serial number of the bank, which is not limited here. The first target bank may represent the bank where the target data is located.

In an embodiment of the present disclosure, the identification information of the first target bank where the target data is located may be determined based on the identification information of the target data, so as to acquire the target data from the first target bank based on the identification information of the first target bank.

In an embodiment of the present disclosure, by determining the identification information of the first target bank where the target data is located and acquiring the target data from the first target bank based on the identification information of the first target bank, reading of cache data from the banks can be achieved.

In some embodiments of the present disclosure, performing the read/write operation on at least one of the plurality of banks based on the identification information of the target data further comprises: in response to determining an absence of the target data in the plurality of banks based on the identification information of the target data, acquiring the target data from a memory or a secondary storage, writing the target data into one of the plurality of banks, and returning the target data.

In an embodiment of the present disclosure, when the data query request results in a miss (i.e., when the target data exists in none of the plurality of banks), the data query request may be routed to the MMU for physical address lookup to acquire the target data from the memory or secondary storage.

After writing the target data into one of the plurality of banks, the target data may be transmitted via a dedicated bus interface of the bank to return the target data to the requester.

In an embodiment of the present disclosure, in response to determining the absence of the target data in the plurality of banks based on the identification information of the target data, acquiring the target data from the memory or secondary storage, writing the target data into one of the plurality of banks, and returning the target data, writing the data into the bank and reading the cache data from the bank can be achieved.

In some embodiments of the present disclosure, writing the target data into one of the plurality of banks comprises: determining a second target bank in the plurality of banks by a Hash algorithm; and writing the target data to the second target bank.

In an embodiment of the present disclosure, the second target bank may represent the bank for storing the target data.

In an embodiment of the present disclosure, after writing the target data into the second target bank, information on the target data is stored in the second target bank may be forwarded to a shared directory for subsequent cache lookups based on the shared directory.

In an embodiment of the present disclosure, by determining the second target bank in the plurality of banks by the Hash algorithm and writing the target data into the second target bank, load balancing among the respective banks may be achieved.

In other embodiments of the present disclosure, writing the target data into one of the plurality of banks comprises: randomly detrmining a second target bank from the plurality of banks; and writing the target data into the second target bank.

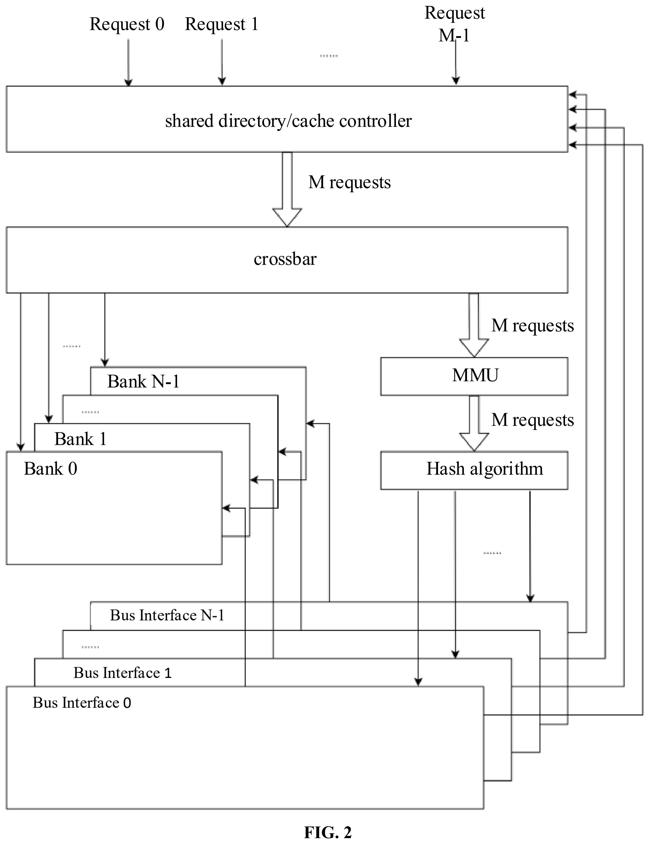

The following describes a specific application scenario to illustrate the cache method provided in an embodiment of the present disclosure. FIG. 2 illustrates a schematic structural diagram of a VIPB cache provided in an embodiment of the present disclosure.

As shown in FIG. 2, a cache space of a shared cache is partitioned into N banks based on physical addresses, namely Bank 0 to Bank N-1. The N banks allow parallel access. Each bank is provided with a dedicated bus interface, namely Bus Interface 0 to Bus Interface N-1. The N bus interfaces are connected to a cache controller, respectively.

The cache controller comprises a shared directory. The cache controller may, in response to a data query request, determine whether the data query request results in a cache hit (i.e., whether the target data requested by the data query request is present in the N banks) based on the shared directory. If the data query request results in a hit (i.e., the target data is present in any of the N banks), the serial number of the first target bank where the target data is located may be determined based on the shared directory, and then the target data may be acquired from the first target bank through a crossbar (Xbar) based on the serial number of the first target bank.

If the data query request results in a miss (i.e., none of the N banks contains the target data), the data query request may be routed to the MMU through the crossbar (Xbar) for lookup for physical address, so as to acquire the target data from the memory or secondary storage. And, a second target bank may be determined in the N banks by the Hash algorithm, and the target data is written into the second target bank. After the target data is written into the second target bank, the target data may be transmitted via the bus interface corresponding to the second target bank to return the target data to the requester.

FIG. 2 illustrates a scenario with M requests (i.e., data query requests), wherein the M requests include Request 0 to Request M-1. Any request among these M requests may be processed respectively with the method described above.

It is appreciated that the respective method embodiments described above may be combined with one another to form combined embodiments, provided that such combinations do not violate underlying logical principles. Due to limited space, these combined embodiments are not described herein. Those skilled in the art will appreciate that in the methods described above of the specific implementations, the specific execution sequence of the steps shall be determined by their functions and the possible inherent logic.

In addition, the present disclosure further provides a cache apparatus, an electronic device, a computer readable storage medium, and a computer program product. All of the above may be used to implement any of the cache methods provided by the present disclosure. For the corresponding technical solutions and technical effects, reference may be made to the corresponding description in the method section, which will not be repeated here.

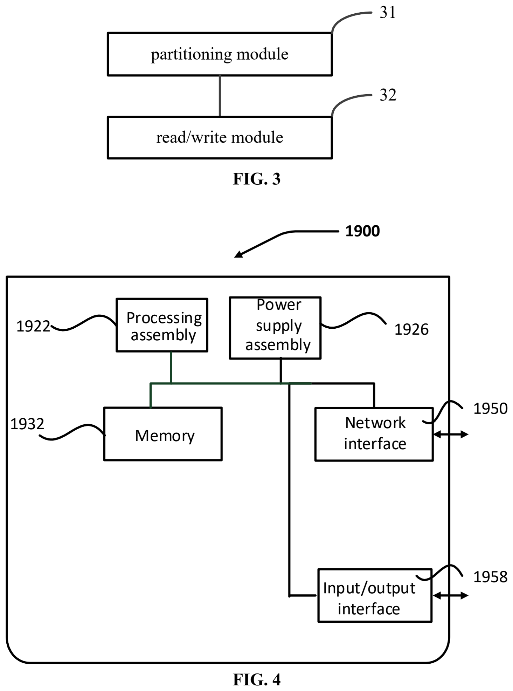

FIG. 3 illustrates a block diagram of a cache apparatus provided by an embodiment of the present disclosure. As shown in FIG. 3, the cache apparatus comprises:
a partitioning module 31 configured to partition a cache space into a plurality of banks based on physical addresses, wherein the plurality of banks allow parallel access; and
a read/write module 32 configured to perform a read/write operation on at least one of the plurality of banks in response to a data query request. In an embodiment of the present disclosure, the partitioning module 31 is further configured to:
   partition a cache space of a shared cache into a plurality of banks based on physical addresses.

In an embodiment of the present disclosure, the read/write module 32 is further configured to:
in response to a data query request, acquire identification information of target data requested by the data query request; and
perform the read/write operation on at least one of the plurality of banks based on the identification information of the target data.

In an embodiment of the present disclosure, the read/write module 32 is further configured to:
in response to determining a presence of the target data in the plurality of banks based on the identification information of the target data, acquire the target data from the plurality of banks and return the target data.

In an embodiment of the present disclosure, the read/write module 32 is further configured to:
determine identification information of a first target bank where the target data is located; and
acquire the target data from the first target bank based on the identification information of the first target bank.

In an embodiment of the present disclosure, the read/write module 32 is further configured to:
in response to determining an absence of the target data in the plurality of banks based on the identification information of the target data, acquire the target data from a memory or a secondary storage, write the target data into one of the plurality of banks, and return the target data.

In an embodiment of the present disclosure, the read/write module 32 is further configured to:
determine a second target bank in the plurality of banks by a Hash algorithm; and
write the target data into the second target bank.

In an embodiment of the present disclosure, by partitioning the cache space into a plurality of banks based on physical addresses, with the plurality of banks allowing parallel access, and performing the read/write operation on at least one of the plurality of banks in response to a data query request, each bank only needs to be connected respectively to one memory channel rather than being connected respectively to each memory channel, reducing the complexity and size of the interconnection design, lowering the power consumption of the cache, and improving the performance of the data path of the processor. Moreover, in an embodiment of the present disclosure, the banks partitioned by the physical addresses perform lookup for physical address by a MMU or a TLB prior to writing data, thereby eliminating aliasing issues.

It should be noted that, the functions of or the modules included in the apparatus provided in the embodiments of the present disclosure may be used to carry out the methods described in the above method embodiments, the specific implementation and the technical effects of which may refer to the description of the above method embodiments and will not be repeated herein for the sake of brevity.

An embodiment of the present disclosure further provides a computer readable storage medium having computer program instructions stored therein, wherein the computer program instructions, when executed by a processor, implement the methods described above. The computer readable storage medium may be a non-transitory computer readable storage medium or a transitory computer readable storage medium.

An embodiment of the present disclosure further provides a computer program comprising computer readable code, wherein when the computer readable code runs in an electronic device, a processor of the electronic device carries out the methods described above.

An embodiment of the present disclosure further provides a computer program product comprising computer readable code, or a non-transitory computer readable storage medium carrying computer readable code, wherein when the computer readable code runs in an electronic device, a processor of the electronic device carries out the methods described above.

An embodiment of the present disclosure further provides an electronic device, comprising: one or more processors; and a memory for storing executable instructions, wherein the one or more processors are configured to invoke the executable instructions stored in the memory to carry out the methods described above.

In an embodiment of the present disclosure, the electronic device may be provided as a terminal, a server, or devices in other forms.

FIG. 4 illustrates a block diagram of an electronic device 1900 provided in an embodiment of the present disclosure. For example, the electronic device 1900 may be provided as a terminal or a server. Referring to FIG. 4, the electronic device 1900 comprises a processing assembly 1922, which further may comprise one or more processors, and a memory 1932 representing storage resources for storing instructions executable by the processing assembly 1922, such as application programs. The application programs stored in the memory 1932 may include one or more modules, each corresponding to a set of instructions. In addition, the processing assembly 1922 is configured to execute the instructions to carry out the above cache methods.

In an embodiment of the present disclosure, further referring to Fig. 4, the electronic device 1900 may further comprise a power supply assembly 1926, a wired or wireless network interface 1950, and an input/output (I/O) interface 1958. The power supply assembly 1926 is configured to execute power management of the electronic device 1900; and the wired or wireless network interface 1950 is configured to connect the electronic device 1900 to a network. The electronic device 1900 may operate based on an operating system stored in the memory 1932, such as Windows Server^{™} of Microsoft, Mac OS X^{™} (a graphical user interface-based operating system launched by Apple), Unix^{™} (a multi-user and multi-process computer operating system), Linux^{™} (a free and open-source Unix-like operating system), FreeBSD^{™} (an open-source Unix-like operating system), or the like.

An exemplary embodiment of the present disclosure further provides a non-transitory computer readable storage medium, such as the memory 1932 that includes computer program instructions. The computer program instructions may be executed by the processing assembly 1922 of the electronic device 1900 to implement the above cache methods.

The present disclosure may be a system, a method, and/or a computer program product. The computer program product may include a computer readable storage medium carrying computer readable program instructions for causing a processor to implement the aspects of the present disclosure.

The computer readable storage medium can be a tangible device that can retain and store instructions used by an instruction executing device. The computer readable storage medium may be, but not limited to, e.g., electronic storage device, magnetic storage device, optical storage device, electromagnetic storage device, semiconductor storage device, or any proper combination thereof. A non-exhaustive list of more specific examples of the computer readable storage medium includes: portable computer diskette, hard disk, random access memory (RAM), read-only memory (ROM), erasable programmable read-only memory (EPROM or Flash memory), static random access memory (SRAM), portable compact disc read-only memory (CD-ROM), digital versatile disk (DVD), memory stick, floppy disk, mechanically encoded device (for example, punch-cards or raised structures in a groove having instructions recorded thereon), and any proper combination thereof. A computer readable storage medium referred herein should not to be construed as transitory signal *per se,* such as radio waves or other freely propagating electromagnetic waves, electromagnetic waves propagating through a waveguide or other transmission media (e.g., light pulses passing through a fiber-optic cable), or electrical signal transmitted through a wire.

Computer readable program instructions described herein can be downloaded to individual computing/processing devices from a computer readable storage medium or to an external computer or secondary storage device via network, for example, the Internet, local area network, wide area network and/or wireless network. The network may comprise copper transmission cables, optical fiber transmission, wireless transmission, routers, firewalls, switches, gateway computers, and/or edge servers. A network adapter card or network interface in each computing/processing device receives computer readable program instructions from the network and forwards the computer readable program instructions for storage in a computer readable storage medium in the respective computing/processing devices.

Computer program instructions for carrying out the operations of the present disclosure may be assembler instructions, instruction-set-architecture (ISA) instructions, machine instructions, machine-related instructions, microcode, firmware instructions, state-setting data, or source code or object code written in any combination of one or more programming languages, including an object oriented programming language, such as Smalltalk, C++, or the like, and the conventional procedural programming languages, such as the "C" programming language or similar programming languages. The computer readable program instructions may be executed completely on the user's computer, partly on the user's computer, as a stand-alone software package, partly on the user's computer and partly on a remote computer, or completely on a remote computer or a server. In the scenario with remote computer, the remote computer may be connected to the user's computer through any type of network, including local area network (LAN) or wide area network (WAN), or connected to an external computer (for example, connected through the Internet from an Internet Service Provider). In some embodiments of the present disclosure, electronic circuitry, such as programmable logic circuitry, field-programmable gate arrays (FPGA), or programmable logic arrays (PLA), may be customized from state information of the computer readable program instructions; the electronic circuitry may execute the computer readable program instructions, so as to achieve the aspects of the present disclosure.

Aspects of the present disclosure have been described herein with reference to the flowchart and/or the block diagrams of the method, device (systems), and computer program product according to the embodiments of the present disclosure. It will be appreciated that each block in the flowchart and/or the block diagram, and combinations of blocks in the flowchart and/or block diagram, can be implemented by the computer readable program instructions.

These computer readable program instructions may be provided to a processor of a general purpose computer, a dedicated computer, or other programmable data processing apparatuses, to produce a machine, such that the instructions create means for implementing the functions/acts specified in one or more blocks in the flowchart and/or block diagram when executed by the processor of the computer or other programmable data processing apparatuses. These computer readable program instructions may also be stored in a computer readable storage medium, wherein the instructions cause a computer, a programmable data processing apparatus and/or other devices to function in a particular manner, such that the computer readable storage medium having instructions stored therein comprises a product that includes instructions implementing aspects of the functions/acts specified in one or more blocks in the flowchart and/or block diagram.

The computer readable program instructions may also be loaded onto a computer, other programmable data processing apparatuses, or other devices to have a series of operational steps performed on the computer, other programmable apparatuses or other devices, so as to produce a computer implemented processes, such that the instructions executed on the computer, other programmable apparatuses or other devices implement the functions/acts specified in one or more blocks in the flowchart and/or block diagram.

The flowcharts and block diagrams in the drawings illustrate the systematic architecture, function, and operation that may be implemented by the system, method and computer program product according to the various embodiments of the present disclosure. In this regard, each block in the flowchart or block diagram may represent a part of a module, a program segment, or instruction, which comprises one or more executable instructions for implementing the specified logical function(s). In some alternative implementations, the functions denoted in the blocks may occur in an order different from that denoted in the drawings. For example, two contiguous blocks may, in fact, be executed substantially parallel, or sometimes they may be executed in a reversed order, depending upon the functions involved. It will also be noted that each block in the block diagram and/or flowchart, and combinations of blocks in the block diagram and/or flowchart, can be implemented by dedicated hardware-based systems executing the specified functions or acts, or by combinations of dedicated hardware and computer instructions

The computer program product may be implemented specifically by hardware, software, or a combination thereof. In some embodiments of the present disclosure, the computer program product is embodied as a computer storage medium. In other embodiments of the present disclosure, the computer program product is embodied as a software product, such as a software development kit (SDK).

The above description of each embodiment tends to emphasize the differences between the embodiments. The similarities or common aspects can be used for mutual reference. For the sake of brevity, they will not be repeated here.

If the technical solutions of the embodiments of the present disclosure involve personal information, products applying the technical solutions of the embodiments of the present disclosure have clearly informed the rules for processing personal information and obtained the individual's voluntary consent before processing the personal information. If the technical solutions of the embodiments of the present disclosure involve confidential personal information, products applying the technical solutions of the embodiments of the present disclosure have obtained the individual's separate consent before processing the confidential personal information, and simultaneously meet the requirement of "explicit consent". For example, at a personal information acquisition device such as a camera, a clear and conspicuous sign is provided to notify that one has entered the personal information acquisition region and his or her personal information will be collected. If an individual voluntarily enters the personal information acquisition region, it is regarded as consent to the acquisition of his or her personal information. Or, for a personal information processing device, when the personal information processing rules are notified by means of an obvious sign/message, personal authorization is obtained through pop-up messages or by asking the individual to upload his or her personal information by himself or herself. The personal information processing rules may include information such as the personal information processing party, the purpose of personal information processing, the processing method, and the types of personal information to be processed.

Although the embodiments of the present disclosure have been described above, it will be appreciated that the above descriptions are merely exemplary, but not exhaustive; and that the disclosed embodiments are not limiting. A number of variations and modifications may apparently occur to those of ordinary skill in the art without departing from the scopes and spirits of the described embodiments. The terms in the present disclosure are selected to provide the best explanation on the principles and practical applications of the embodiments or the technical improvements to the arts on market, or to make the embodiments described herein understandable to those of ordinary skill in the art.

### Industrial Utility

In the cache method provided in the present disclosure, the cache space is partitioned into a plurality of banks based on physical addresses, with the plurality of banks allowing parallel access, and in response to a data query request, a read/write operation is performed on at least one of the plurality of banks. Thus, each bank only needs to be connected respectively to one memory channel, rather than being connected respectively to each memory channel, thereby reducing the complexity and size of the interconnection design, lowering the power consumption of the cache, and improving the performance of the data path of the processor. Moreover, in an embodiment of the present disclosure, the banks partitioned by the physical addresses perform lookup for physical address by a MMU or a TLB prior to writing data, thereby eliminating aliasing issues.

## Claims

1. A cache method, comprising:
partitioning a cache space into a plurality of banks based on physical addresses, wherein the plurality of banks allow parallel access; and
in response to a data query request, performing a read/write operation on at least one of the plurality of banks.

2. The cache method according to claim 1, wherein partitioning the cache space into the plurality of banks based on the physical addresses comprises:
partitioning the cache space of a shared cache into the plurality of banks based on the physical addresses.

3. The cache method according to claim 1 or 2, wherein performing the read/write operation on the at least one of the plurality of banks in response to the data query request comprises:
in response to the data query request, acquiring identification information of target data requested by the data query request; and
performing, based on the identification information of the target data, the read/write operation on the at least one of the plurality of banks.

4. The cache method according to claim 3, wherein performing the read/write operation on the at least one of the plurality banks based on the identification information of the target data comprises:
in response to determining a presence of the target data in the plurality of banks based on the identification information of the target data, acquiring the target data from the plurality of banks, and returning the target data.

5. The cache method according to claim 4, wherein acquiring the target data from the plurality of banks comprises:
determining identification information of a first target bank where the target data is located; and
acquiring the target data from the first target bank based on the identification information of the first target bank.

6. The cache method according to claim 3, wherein performing the read/write operation on the at least one of the plurality banks based on the identification information of the target data further comprises:
in response to determining an absence of the target data in the plurality of banks based on the identification information of the target data, acquiring the target data from a memory or a secondary storage, writing the target data into one of the plurality of banks, and returning the target data.

7. The cache method according to claim 6, wherein writing the target data into one of the plurality of banks comprises:
determining a second target bank in the plurality of banks by a Hash algorithm; and
writing the target data into the second target bank.

8. A cache apparatus, comprising:
a partitioning module configured to partition a cache space into a plurality of banks based on physical addresses, wherein the plurality of banks allow parallel access; and
a read/write module configured to perform a read/write operation on at least one of the plurality of banks in response to a data query request.

9. An electronic device, comprising:
one or more processors; and
a memory for storing executable instructions,
wherein the one or more processors are configured to invoke the executable instructions stored in the memory to carry out the method according to any of claims 1 to 7.

10. A computer readable storage medium having computer program instructions stored therein, wherein the computer program instructions, when executed by a processor, implement the method according to any of claims 1 to 7.

11. A computer program product comprising computer readable code, or a non-transitory computer readable storage medium carrying computer readable code, wherein when the computer readable code runs in an electronic device, a processor of the electronic device carries out the method according to any of claims 1 to 7.
